# EUROPEAN PATENT APPLICATION

(11) **EP 1 263 190 A1**
(43) Date of publication of application: **04.12.2002**
(21) Application number: 02017314.2
(22) Date of filing: 24.02.1997
(51) Int. Cl.: H04M 1/02

(54) **Electronic device with housing supplement**

(30) Priority: 28.02.1996 EP 96102988
(62) Divisional of application: 97903377.6
(71) Applicant: Nokia Corporation, 02150 Espoo (FI)
(72) Inventor: Fuhrmann, Thomas, D-48249 Dulmen/Buldern (DE); Umbach, Dirk, 31139 Hildesheim (DE); Ortscheid, Annett, 44791 Bochum (DE)
(74) Representative: Patel, Dhiren

(57) **Abstract**

The invention relates to an electronic device having a housing (1) which has a housing wall (5) with openings (7) for control elements (8) and/or display elements (9,10). Attachment means (11) for detachably connecting to the housing (1) an external wall element (14) which at least partially covers the housing wall (5) being present on the housing (1), the external wall element (14) having openings (7) which are aligned with the openings (7) in the housing wall (5). As a result, by using different external wall elements (14) the external appearance of the electronic device can be modified.

## Description

The invention relates to an electronic device having a housing which has a housing wall with openings for control and/or display elements.

An electronic device of this kind may be for example a telephone, a cordless phone or mobile phone, a pocket calculator, a television set, a radio receiver or for example another electronic domestic appliance which, as a rule, is used by private individuals. If, for personal reasons or because of predetermined requirements, the external appearance of such an electronic device, for example the shape of the housing or its colour, is to be modified, as a rule this must be carried out by a specialist since during such an operation the electronic components present in the housing of the electronic device are usually exposed. Modification of the appearance of the housing of the electronic device is thus laborious, time-consuming and expensive and, moreover, can as a rule only rarely be carried out by private individuals.

In accordance with the invention there is provided an electronic device having a housing which has a housing wall with openings for control elements and/or display elements, characterized by attachment means for detachably connecting to the housing an external wall element which at least partially covers the housing wall, the external wall element having openings which are aligned with the openings in the housing wall. Advantageous refinements of the invention can be found in the subclaims.

An electronic device in accordance with the invention allows the external appearance of the housing to be modified rapidly and easily even by non-professionals.

With the electronic device according to the invention, a user thus has the possibility of modifying the appearance or design of the housing in an extremely short time and without any difficulty by selecting and fitting on an appropriate external wall element. The user can thus more or less change the housing according to his wishes if external elements with different shapes and colours are available to him for this purpose. Even external wall elements made of different materials are possible.

When the housing wall provided with openings is covered by the external wall element, the openings provided in the housing wall and in the external wall element are aligned with one another so that for example the push-button keys which project through the openings can continue to be used even after the external wall element is fitted on to the housing wall or display elements which are inserted into the openings can continue to be read. This also applies to microphones or loudspeakers inserted into opening, for example in the case of cordless telephones.

With the electronic device according to the invention, the electronics provided in the device are always protected against access by the customer when the external appearance of the housing is modified. Therefore, if one external wall element is to be replaced by another in order to give the electronic device a new design, there is no risk of the electronics present in the housing being damaged when the external wall elements are interchanged or of the user being subjected to danger by the electronics present inside the housing. In this respect, the external wall elements could even be interchanged when an electronic device is operating.

According to an advantageous refinement of the invention, the external wall element can engage, at least partially, over further housing walls of the housing so that the design of the housing can be modified to an even greater extent or adapted to the wishes of the user to an even greater degree.

At the same time, the profile of the external wall element can follow the profile of the housing walls of the housing if emphasis is being placed not so much on the modification of the shape of the housing but rather on changing the colour or the type of material of the housing. However, the external wall elements can of course have different shapes which can also deviate from one another to a greater degree provided it is ensured that after the respective external wall elements have been connected to the housing the respective openings in the fitted-on external wall element and in the housing wall in question are aligned with one another.

According to a very advantageous development of the invention, the external wall element can be of, for example, shell-shaped design so that it can be fitted for example with one edge on to a base which projects outwards beyond the side walls of the housing.

Any desired attachment means can be used to attach the external wall element to the housing of the electronic device, but attachment means with press-on/catch closure can preferably be used. They ensure a secure connection between the external wall element and the housing and, moreover, can be easily used without a special tool being required for them.

The invention is explained in detail below with reference to the drawing, in which:
Figure 1 shows a cordless telephone or mobile phone with external wall element removed;
Figure 2 shows the cordless or mobile phone according to Figure 1 with the external wall element fitted on;
Figure 3 shows the external wall element from the underside; and
Figure 4 shows a section through the wall of the external wall element.

The invention is explained below with reference to a cordless telephone or mobile phone which serves as an example of an electronic device. However, the invention can also be used in other electronic devices, for example in wire-connected telephones, in pocket calculators, in television sets, in radio receivers, in CD players, in cassette recorders etc.

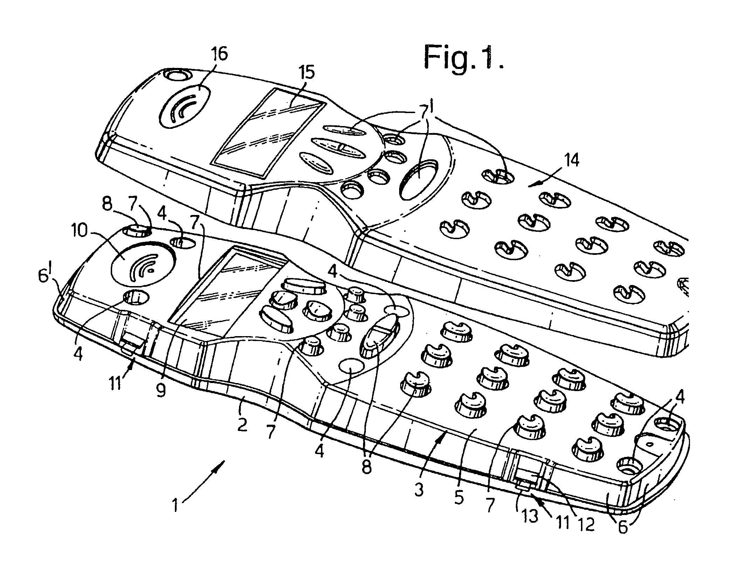

In accordance with Figure 1, a cordless telephone or mobile phone according to the invention has a housing 1 with which a plate-shaped base element 2 and a shell-shaped housing element 3 are associated. The plate-shaped based element 2 and the shell-shaped housing element 3 are connected to one another using screws (not illustrated) which project through openings 4 in the shell-shaped housing element 3 and are screwed into sockets (not illustrated) which are fixedly connected to the inside of the plate-shaped base element 2. Inside the housing 1 there is a carrier plate, attached in a suitable way, for electronic components etc.

The shell-shaped housing element 3 has a housing wall 5 which is located essentially parallel with the plate-shaped base element 2 and at a distance therefrom and is integrally connected to side walls 6 which are supported with their free or lower edge on the plate-shaped base element 2. In this arrangement, the plate-shaped base element 2 projects outwards beyond the side walls 6 by constant distance in its edge region so that a profile with an identical contour is obtained.

In the housing wall 5 there is a plurality of through-openings 7 for electronic components which are mounted on the carrier plate, already mentioned, inside the housing 1, and partially project through the through-openings 7. The through-openings 7 can be provided for example for push-button keys 8, for a display device 9 or for a loudspeaker device/microphone device 10. A corresponding through-opening 7 may also be present in the upper side wall 6 for an aerial.

On the side walls 6, extending in the longitudinal direction of the housing 1, of the shell-shaped housing element 3 there are also in each case two attachment means 11 which are designed as press-on/catch closures at a distance from one another. They are located in each case at the front and rear ends of the telephone. The attachment means 11 have a catch projection 12 which is prestressed outwards in a sprung fashion and can be pressed inwards into the housing 1 counter to the outwardly acting spring force by means of an externally accessible activation element 13. These attachment means serve to attach to the housing 1 an external wall element 14 which is fitted on to the shell-shaped housing element 3 and is also of shell-shaped design.

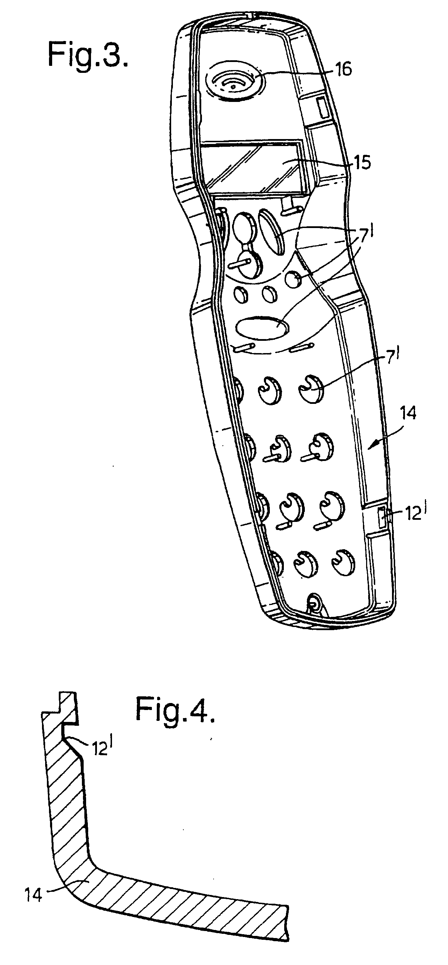

The shell-shaped external wall element 14 which is illustrated in Figures 1 and 3 has approximately the same contour as the shell-shaped housing element 3 but is designed in such a way that it can receive the shell-shaped housing element 3 in it. If the external wall element 14, which is designed as a thin-walled shell, is fitted on to the shell-shaped housing element 3, the shell-shaped external wall element 14 is supported with the free or downwardly pointing edge of its side walls on that part of the plate-shaped base element 2 which projects outwards beyond the shell-shaped housing element 3. Here, the wall thickness of the side walls of the shell-shaped external wall element 14 corresponds to the distance by which the edge of the plate-shaped base element 2 projects outwards beyond the side walls 6, 6' of the shell-shaped housing element 3. As a result, no step remains in the connection area between the shell-shaped external wall element 14 and the plate-shaped base element 2. The height of the side walls of the shell-shaped external wall element 14 can be selected here such that the main face of the external wall element 14 comes to rest at a short distance from the housing wall 5 and as a result does not exert any pressure on the latter.

Likewise, openings 7' which are aligned with the openings 7 in the housing wall 5 of the shell-shaped housing element 3 are provided in the main face of the external wall element 14. Therefore, it is possible to continue to operate the telephone even when the external wall element 14 is fitted on to the shell-shaped housing element 3. At the same time, the push-button keys 8 can be of such a height that they also project outwards beyond the external wall element 14. Openings which are present in the external wall element 14 for the display device 9 and the loudspeaker device/microphone device 10 can be covered, for example by means of a transparent element 15 or a grill 16.

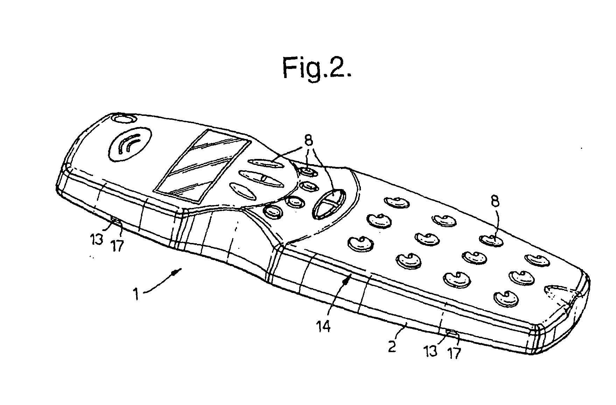

Figure 2 shows the cordless telephone or mobile phone in a state in which the shell-shaped external wall element 14 is fitted on to the shell-shaped housing element 3 and is detachably connected to the housing 1. On the internal faces of the long side walls of the external wall element 14 there are notches 12', one of which is seen in section in Figure 4, for the catch projections 12 of the attachment means 11 so that the catch projections 12 engage in the notches 12' as a result of the outwardly pressing spring force, and thus hold the external wall element on the housing 1. In this state, the activation elements 13 are also pushed outwards but only to such an extent that they do not project beyond the side edge of the plate-shaped base element 2 or of the external wall element 14. The activation elements 13 can extend here in a groove 17 in the upper face of the plate-shaped base element 2. If the activation elements 13 are pressed inwards, that is to say inwards along the groove 17, for example using a pointed object, they move the catch projections 12 correspondingly inwards along with them so that the said catch projections 12 disengage from the notches 12' on the inside of the side walls 6 of the external wall element 14. The external wall element 14 can then be removed from the housing 1.

The external wall element 14 is fitted on to the housing 1 by simply pressing it on. The catch projections 12 then engage automatically in the notches 12'.

The present invention includes any novel feature or combination of features disclosed herein either explicitly or any generalisation thereof irrespective of whether or not it relates to the claimed invention or mitigates any or all of the problems addressed.

In view of the foregoing description it will be evident to a person skilled in the art that various modifications may be made within the scope of the invention.

## Claims

1. Electronic device having a housing (1) which has a housing wall (5) with openings (7) for control elements (8) and/or display elements (9,10), **characterized by** attachment means (11) for detachably connecting to the housing (1) an external wall element (14) which at least partially covers the housing wall (5), the external wall element (14) having openings (7') which are aligned with the openings (7) in the housing wall (5).

2. Electronic device according to Claim 1, **characterized in that** the external wall element (14) engages, at least partially, over further housing walls (6, 6') of the housing (1).

3. Electronic device according to Claim 1 or 2, **characterized in that** the profile of the external wall element (14) follows the profile of the housing walls (5, 6, 6') of the housing (1).

4. Electronic device according to Claim 1, 2 or 3, **characterized in that** the external wall element (14) is of sheil-shaped design.

5. Electronic device according to Claim 2, 3 or 4, **characterized in that** the housing (1) has a base (2) which projects beyond side walls (6, 6') of the housing (1) and on to which the external wall element (14) can be fitted with its edge.

6. Electronic device according to one of Claims 1 to 5, **characterized in that** the attachment means (11) have at least one press-on/catch closure (12, 13).

7. Electronic device according to one of Claims 1 to 6, **characterized in that** it is designed as a telephone.

8. Electronic device according to Claim 7, **characterized in that** the telephone is a cordless telephone or a mobile phone.
